# EUROPEAN PATENT SPECIFICATION

(11) **EP 3 432 627 B1**
(45) Date of publication and mention of the grant of the patent: **02.10.2019**
(21) Application number: 17181969.1
(22) Date of filing: 18.07.2017
(51) Int. Cl.: H04W 12/02, H04W 4/00, H04W 84/18, G06F 21/53

(54) **SECURE DEVICES AND METHODS FOR LPWA COMMUNICATION NETWORKS**
SICHERE VORRICHTUNGEN UND VERFAHREN FÜR LPWA-KOMMUNIKATIONSNETZWERKE
DISPOSITIFS ET PROCÉDÉS SÉCURISÉS POUR RÉSEAUX DE COMMUNICATION LPWA

(43) Date of publication of application: 23.01.2019
(73) Proprietor: Deutsche Telekom AG, 53113 Bonn (DE); Giesecke+Devrient Mobile Security GmbH, 81677 München (DE)
(72) Inventor: SCHNIEDERS, Dominik, 52078 Aachen (DE); SPITZ, Stephan, 85757 Karlsfeld (DE)
(74) Representative: Braun-Dullaeus Pannen Emmerling Patent- & Rechtsanwaltspartnerschaft mbB

(56) References cited:
- US-A1- 2015 033 291
- US-A1- 2015 189 509

## Description

### TECHNICAL FIELD

In general, the invention relates to wireless communication networks. More specifically, the invention relates to secure devices, methods and systems for wireless communication networks based on Low-Power Wide-Area (LPWA) technology, in particular narrowband IoT communication networks.

### BACKGROUND

Narrowband IoT (NB IoT) is a new technology standard, designed to broaden the future of IoT connectivity. Ratified by the 3GPP, NB IoT is starting to being deployed by mobile network operators across the globe. NB IoT is a Low-Power Wide-Area (LPWA) network technology, developed to enable efficient communication for mass distributed NB IoT communication devices across wide geographical footprints as well in scenarios with deep indoor penetration, e.g. within an urban infrastructure. It's ideal for devices that generate low data traffic, rely on batteries and typically have a long device life cycle. A battery life of more than 10 years can be supported for a wide range of use cases. Moreover, NB IoT significantly improves the system capacity and spectrum efficiency, especially in deep coverage. Thus, NB IoT can be used to connect simple communication devices, such as sensors, to drive new data streams, reduce operational costs and create new business models. Smart Meters, Smart Bins, environmental monitoring and precision agriculture are just a few applications of NB IoT. Such devices are also referred to as NB IoT cellular devices. More information about NB loT can be found in the 3GPP technical report TR 45.820.

Due to the generally limited hardware resources of a communication device based on LPWA technology and, in particular, NB IoT technology, security mechanisms known, for instance, from smart phones cannot be used for such a communication device. Thus, there is a need for improved devices, methods and systems for wireless communication networks based on LPWA technology, in particular narrowband IoT networks.

US 2015/0189509 A1 discloses a configurable multimode wireless radio transceiver supporting different radio access technologies and implementing different protection domains, which can comprise different radio configuration parameters. The wireless radio transceiver comprises a protection domain controller (PDC) for controlling the different protection domains. The PDC can define the access of a configuration software to one or more of the protection domains for configuring the radio configuration parameters stored therein.

US 2015/033291 A1 discloses a NFC enabled device, such as a smartphone, comprising a secure element, such as a smart card, with a plurality of secure element partitions, which are allocated to a plurality of card issuers. Each secure element partition can be configured to define access rules for the management and control of data therein.

### SUMMARY OF THE INVENTION

It is an object of the invention to provide improved devices, methods and systems for wireless communication networks based on LPWA technology, in particular narrowband IOT networks.

The foregoing and other objects are achieved by the subject matter of the independent claims. Further implementation forms are apparent from the dependent claims, the description and the figures.

Embodiments of the present invention relate to communication devices that use NB IoT technology. Although the description is written by using the NB IoT as the access technology, the embodiments are applicable also for communication devices that use other wireless communication technologies as well, such as Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and/or 5G system. As used herein, NB IoT technology can comprises, for instance, narrowband LTE, narrowband M2M, and narrowband OFDMA techniques.

In embodiments of the present invention communication devices may be capable of communicating content, data, information and/or signals via a wireless medium or channel. In some embodiments, the wireless medium may include, for example, a radio channel, a cellular channel, an RF channel, a WiFi channel, an IR channel, a Bluetooth (BT) channel, a Global Navigation Satellite System (GNSS) channel, and the like.

In embodiments of the present invention communication devices may include one or more radio modules (or short radios) including circuitry and/or logic to perform wireless communication between the communication devices. In embodiments of the present invention the radio modules may include one or more wireless receivers (Rx) including circuitry and/or logic to receive wireless communication signals, RF signals, frames, blocks, transmission streams, packets, messages, data items, and/or data. In embodiments of the present invention the radio modules may include one or more wireless transmitters (Tx) including circuitry and/or logic to transmit wireless communication signals, RF signals, frames, blocks, transmission streams, packets, messages, data items, and/or data. In embodiments of the present invention, the radio modules may include Radio Frequency (RF) elements, baseband elements, modulation elements, demodulation elements, amplifiers, analog to digital and/or digital to analog converters, filters and the like, which can be implemented in hardware and/or software.

In embodiments of the present invention the radio modules may be configured to communicate according to an OFDM scheme and/or an FDMA scheme in an uplink direction and/or a downlink direction. In other embodiments, the radios of the communication devices may be configured to communicate according to any other additional or alternative modulation scheme. In embodiments of the present invention, the radios may include, or may be associated with, one or more antennas. In one example, a communication device may include a single antenna. In another example, a communication device may include two or more antennas. Such antennas may include any type of antennas suitable for transmitting and/or receiving wireless communication signals, blocks, frames, transmission streams, packets, messages and/or data. The antennas may include, for example, antennas suitable for directional communication, e.g., using beamforming techniques. For example, the antennas may include a phased array antenna, a multiple element antenna, a set of switched beam antennas, and/or the like. In some embodiments, the antennas may implement transmit and receive functionalities using separate transmit and receive antenna elements. In some embodiments, the antennas may implement transmit and receive functionalities using common and/or integrated transmit/receive elements.

In embodiments of the present invention a communication device may include a processor. The processor may be configured to perform and/or to trigger, cause, instruct and/or control the communication device to perform, one or more communications, to generate and/or communicate one or more messages and/or transmissions, and/or to perform one or more functionalities, operations and/or procedures. In embodiments of the present invention the processor control unit may include circuitry and/or logic, Media-Access Control (MAC) circuitry and/or logic, Physical Layer (PHY) circuitry and/or logic, and/or any other circuitry and/or logic, configured to perform the functionality of the processor.

In embodiments of the present invention, at least part of the functionality of the processor may be implemented by an integrated circuit, for example, a chip, e.g., a System on Chip (SoC). In one example, the chip or SoC may be configured to perform one or more functionalities of the radio as well. For example, the chip or SoC may include one or more elements of the processor and/or one or more elements of the radio. In one example, the processor and the radio may be implemented as part of the chip or SoC.

In embodiments of the present invention, the communication device can be a wearable device, a sensor, small device, a mobile device, and/or any other device, which may be, for example, powered by a battery and/or any other power source having a limited capacity.

In embodiments of the present invention, the communication device can be configured to communicate over one or more narrowband channels, for example, channels with a channel bandwidth of about 200 Kilohertz (KHz). In embodiments of the invention a minimum system bandwidth of 200 kHz on both downlink and uplink can be used. In each direction, the 200 kHz channel can be divided into narrow bandwidth subcarriers, for instance, 48 on the downlink and 36 on the uplink. In the downlink direction, Orthogonal Frequency Division Multiple Access (OFDMA) can be used. In the uplink direction Frequency Division Multiple Access (FDMA) can be used.

More specifically, according to a first aspect the invention relates to a communication device for communicating data over a low power wide area, LPWA, communication network, in particular a narrowband IoT communication network. The communication device comprises: a processor configured to process data; a memory configured to store data; a radio configured to transmit and/or receive data over the LPWA communication network; and a security system. The security system is configured to operate, i.e. implement a plurality of logically separated sets of security domains, including a master set of security domains and one or more slave sets of security domains, on the processor and the memory, wherein each set of security domains comprises a processor security domain and a memory security domain, wherein the processor security domain and the memory security domain of the master set of security domains are configured to implement for each of the one or more slave sets of security domains a respective use policy, which defines use and/or access rights of the respective slave set of security domains.

Thus, an improved communication device for wireless communication networks based on LPWA technology, in particular narrowband IOT networks, is provided.

The security system can be implemented in hardware and/or software. In an embodiment, the security system can be implemented using virtualization techniques. In a further possible embodiment of the communication device the processor, the memory and the radio are implemented as a system on a chip. In a further possible embodiment the communication device further comprises a communication bus, wherein the communication bus is configured to exchange data between the processor, the memory and the radio.

Still according to the first aspect, the processor security domain and the memory security domain of the master set of security domains are configured to store the respective use policy in the respective memory domain of the one or more slave sets of security domains, the respective processor security domain of the one or more slave sets of security domains is configured to enforce the respective use policy stored in the respective memory domain of the one or more slave sets of security domains, and the master set of security domains, in particular the processor security domain of the master set of security domains, is configured to access the radio for receiving from a network management entity a new use policy and/or an updated use policy for one of the one or more slave sets of security domains.

In a further possible embodiment of the communication device according to the first aspect, the master set of security domains, in particular the processor security domain of the master set of security domains, is further configured to authenticate the communication device within the LPWA communication network. In an embodiment, the processor security domain of the master set of security domains can be configured to authenticate the communication device within the LPWA communication network using authentication credentials, such as a cryptographic authentication key, stored in the memory security domain of the master set of security domains.

In a further possible embodiment of the communication device according to the first aspect, the processor security domain of the master set of security domains is further configured to verify a digital signature of a new use policy and/or an updated use policy for one of the one or more slave sets of security domains. In an embodiment, the master set of security domains is further configured to receive the digital signature along with the new use policy and/or updated use policy via the radio from a network management entity.

In a further possible embodiment of the communication device according to the first aspect, the respective use policy implemented in the respective slave set of security domains defines use and/or access rights of the respective slave set of security domains for using and/or accessing the radio for transmitting and/or receiving data over the LPWA communication network.

In a further possible embodiment of the communication device according to the first aspect, the communication device further comprises a sensor, wherein the respective use policy implemented in the respective slave set of security domains defines use and/or access rights of the respective slave set of security domains for using and/or accessing the sensor. In an embodiment, the respective use policies can define which of the one or more slave sets of security domains can access the sensor, for instance, in order to collect sensor data.

In a further possible embodiment of the communication device according to the first aspect, the communication device further comprises an actuator, wherein the respective use policy implemented in the respective slave set of security domains defines the use and/or access rights of the respective slave set of security domains for using and/or accessing the actuator.

In a further possible embodiment of the communication device according to the first aspect, the communication device further comprises a power storage, in particular a battery, configured to supply electrical power, wherein the respective use policy implemented in the respective slave set of security domains defines for the respective slave set of security domains a respective electrical power consumption limit.

In a further possible embodiment of the communication device according to the first aspect, the respective use policy implemented in the respective slave set of security domains defines that the respective slave set of security domains is configured to receive from a network management entity a new use policy and/or an updated policy for the respective slave set of security domains.

In a further possible embodiment of the communication device according to the first aspect, the respective use policy implemented in the respective slave set of security domains defines that the respective slave set of security domains is accessible by a first network entity and a second network entity.

In a further possible embodiment of the communication device according to the first aspect, the processor is configured to implement a real-time execution environment based on a real-time operating system, wherein the security system is configured to operate the respective processor security domains of the plurality of sets of security domains in parallel to the real-time execution environment.

In a further possible embodiment of the communication device according to the first aspect, the memory comprises in addition to the respective memory security domains of the plurality of sets of security domains a real-time memory portion that is configured to be accessible from the real-time execution environment and the respective processor security domains of the plurality of sets of security domains. In a further possible embodiment of the communication device the memory can comprise a RAM, a ROM and/or a Flash memory.

According to a second aspect the invention relates to a corresponding method of operating a communication device for communicating data over a low power wide area, LPWA, communication network, in particular a narrowband loT communication network, as disclosed by appended claim 12.

The method according to the second aspect of the invention can be performed by the communication device according to the first aspect of the invention and its different embodiments. Thus, further features of the method according to the second aspect of the invention result directly from the functionality of the communication device according to the first aspect of the invention and its different embodiments and implementation forms.

According to a third aspect the invention relates to a computer program product comprising program code for performing the method according to the second aspect of the invention, when executed on a computer or a processor.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a NB loT communication network comprising a communication device according to an embodiment;
Fig. 2 shows a more detailed schematic diagram of a communication device according to an embodiment; and
Fig. 3 shows a diagram illustrating a method for operating a communication device according to an embodiment.

In the various figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

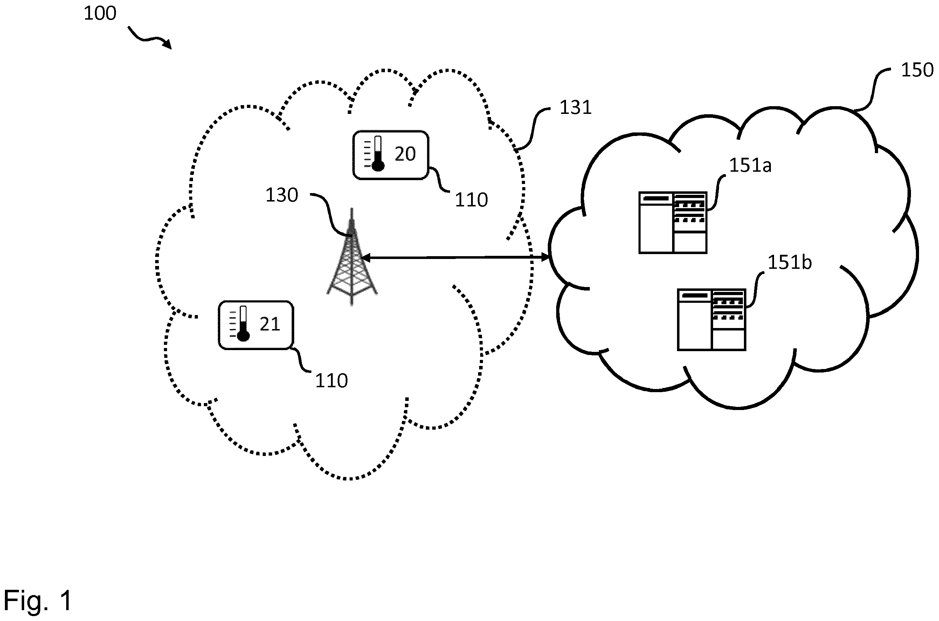

Figure 1 shows a schematic diagram of a cellular communication network 100. The cellular communication network 100 is a low-power wide-area (LPWA) communication network 100, in particular a LPWA communication network 100 based on narrowband (NB) loT technology, as described, for instance, in the 3GPP technical report TR 45.820.

The cellular communication network 100 comprises a radio access network 131, a core network 150 and a plurality of NB IoT communication devices 110. In the exemplary embodiment shown in figure 1, the plurality of NB loT communication devices are smart temperature sensors configured to monitor temperature data and to provide the temperature data via the core network 150 of the NB IoT communication network 100 to a remote server configured to collect and analyze the temperature data from the plurality of NB IoT communication devices 110.

For the sake of clarity figure 1 shows only a single exemplary base station 130, which is part of the radio access network 131. In other embodiments the radio access network 131 can comprises a plurality of base stations similar to the exemplary base station 130 shown in figure 1.

The core network 150 comprises entities or functions for operating the NB IoT communication network 100. In the exemplary embodiment, shown in figure 1 the core network 150 comprises an authentication entity 151a configured to perform an authentication procedure with each of the NB IoT communication devices 110 before granting full access to the NB IoT communication network 100.

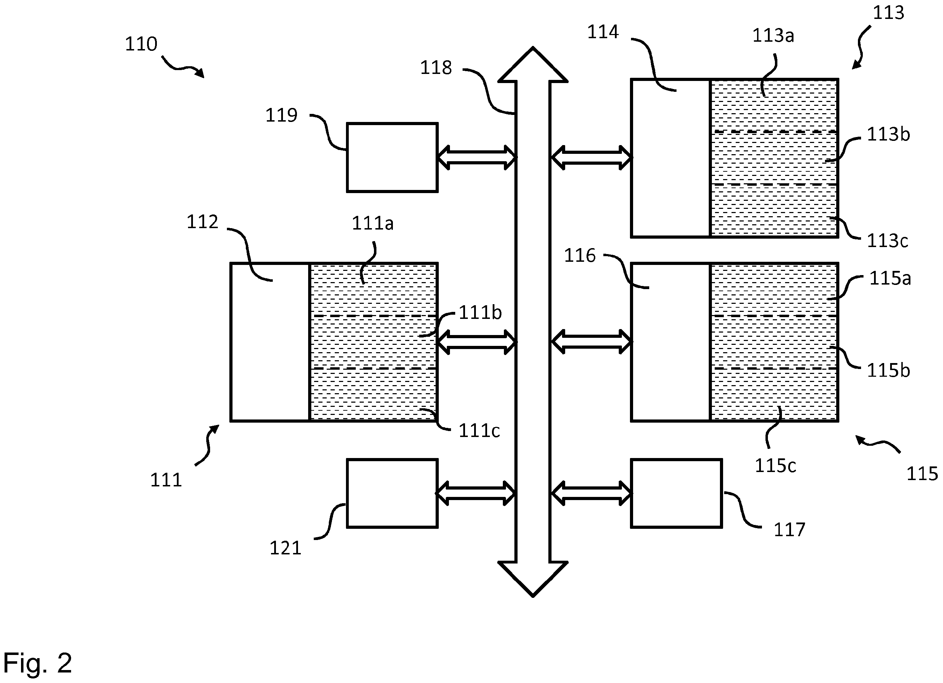

Under further reference to figure 2 in the following an embodiment of the NB IoT communication device 110 will be described. The communication device 110 comprises a processor 111 configured to process data and running applications, a memory comprising a RAM 113 and a Flash memory 115 configured to store volatile and non-volatile data (in particular executable application code), respectively, and a radio 117 configured to transmit and/or receive data over the NB IoT communication network 100. In an embodiment, the radio 117 can be configured to use one or more subcarriers of a channel bandwidth of about 200 Kilohertz (KHz) to communicate with the base station 130 on the basis of an OFDMA scheme in the downlink direction and on the basis of a FDMA scheme in the uplink direction. Alternatively to or in addition to the Flash memory 115 the communication device 110a can comprise a ROM as well.

In an embodiment, the processor 111, the RAM 113, the Flash memory 115 and/or the radio 117 can be implemented as a system on a chip. As illustrated in figure 2, in an embodiment the communication device 110a further comprises a communication bus system 118 configured to provide for the flow of data between the processor 111, the RAM 113, the Flash memory 115 and the radio 117.

The communication device 110 further comprises a security system configured to operate a plurality of logically separated sets of security domains 111a-c, 113a-c, 115a-c, including a master set of security domains 111a, 113a, 115a and one or more slave sets of security domains 111b,c, 113b,c, 115b,c, on the processor 111 and the memory, i.e. the volatile RAM 113 and the non-volatile Flash memory 115, wherein each set of security domains comprises a processor security domain 111a-c and a memory security domain 113a-c, 115a-c. In the exemplary embodiment shown in figure 2 the security system comprises three sets of logically separated security domains 111a-c, 113a-c, 115a-c, namely the master set of security domains 111a, 113a, 115a, comprising a processor security domain 111a, a RAM security domain 113a and a Flash memory security domain 115a, and two slave sets of security domains 111b,c, 113b,c, 115b,c, comprising a respective processor security domain 111b,c, a respective RAM security domain 113b,c and a respective Flash memory security domain 115b,c. As already mentioned, the respective security domains of a set of security domains, for instance, the processor security domain 111a, the RAM security domain 113a and the Flash memory security domain 115a of the master set of security domains are logically separated from the security domains of the other sets of security domains.

The processor security domain 111a and the memory security domain 113a, 115a of the master set of security domains 111a, 113a, 115a are configured to implement for each of the two slave sets of security domains 111b,c, 113b,c, 115b,c shown in figure 2 a respective use policy, which defines use and/or access rights of the respective slave set of security domains 111b,c, 113b,c, 115b,c.

In an embodiment, the processor security domain 111a and the memory security domain 113a, 115a of the master set of security domains 111a, 113a, 115a are configured to store the respective use policy in the respective memory domain 113b,c, 115b,c of the two slave sets of security domains 111b,c, 113b,c, 115b,c shown in figure 2.

In an embodiment, the respective processor security domain 111b,c of the two slave sets of security domains 111b,c, 113b,c, 115b,c shown in figure 2 is configured to enforce the respective use policy stored in the respective memory domain 113b,c, 115b,c of the two slave sets of security domains 111b,c, 113b,c, 115b,c shown in figure 2.

In an embodiment, the master set of security domains 111a, 113a, 115a shown in figure 2, in particular the processor security domain 111a thereof, is configured to access the radio 117 via the communication bus 118 for receiving from a network management entity 151b a new use policy and/or an updated use policy for at least one of the two slave sets of security domains 111b,c, 113b,c, 115b,c shown in figure 2. Preferably, the processor security domain 111a of the master set of security domains 111a, 113a, 115a is configured to verify a digital signature of a new use policy and/or an updated use policy for the slave sets of security domains 111b,c, 113b,c, 115b,c. In an embodiment, the master set of security domains 111a, 113a, 115a can obtain the digital signature along with the new use policy and/or updated use policy via the radio from the network management entity 151b.

In an embodiment, the master set of security domains 111a, 113a, 115a is further configured to authenticate the communication device 110 within the LPWA communication network 100, in particular with the authentication entity 151a of the LPWA communication network 100. In an embodiment, the processor security domain 111a of the master set of security domains 111a, 113a, 115a can be configured to authenticate the communication device 110 within the LPWA communication network 100 using authentication credentials, such as a cryptographic authentication key, stored in the Flash memory security domain 115a of the master set of security domains 111a, 113a, 115a. Thus, in an embodiment the master set of security domains 111a, 113a, 115a is further configured to provide an authentication function.

In an embodiment, the respective use policy implemented in the respective slave set of security domains 111b,c, 113b,c, 115b,c defines use and/or access rights of the respective slave set of security domains 111b,c, 113b,c, 115b,c for using and/or accessing the radio 117 for transmitting and/or receiving data over the LPWA communication network 100. By way of example, in an embodiment a first use policy implemented by the master set of security domains 111a, 113a, 115a in the first slave set of security domains 111b, 113b, 115b can define use and/or access rights of the first slave set of security domains 111b, 113b, 115b that allow the first slave set of security domains 111b, 113b, 115b, in particular the processor security domain 111b thereof, to use and/or access the radio 117 for transmitting and/or receiving data over the LPWA communication network 100, whereas a second use policy implemented by the master set of security domains 111a, 113a, 115a in the second slave set of security domains 111c, 113c, 115c can define use and/or access rights of the second slave set of security domains 111c, 113c, 115c that do not allow the second slave set of security domains 111c, 113c, 115c, in particular the processor security domain 111c thereof, to use and/or access the radio 117 for transmitting and/or receiving data over the LPWA communication network 100.

As illustrated in figure 2, in an embodiment the communication device 110 can further comprise a sensor 119 and/or an actuator 121. In an embodiment, the respective use policy implemented in the respective slave set of security domains 111b,c, 113b,c, 115b,c defines use and/or access rights of the respective slave set of security domains 111b,c, 113b,c, 115b,c for using and/or accessing the sensor 119 and/or the actuator 121. By way of example, in an embodiment a first use policy implemented by the master set of security domains 111a, 113a, 115a in the first slave set of security domains 111b, 113b, 115b can define use and/or access rights of the first slave set of security domains 111b, 113b, 115b that allow the first slave set of security domains 111b, 113b, 115b, in particular the processor security domain 111b thereof, to use and/or access the sensor 119 and/or the actuator 121, whereas a second use policy implemented by the master set of security domains 111a, 113a, 115a in the second slave set of security domains 111c, 113c, 115c can define use and/or access rights of the second slave set of security domains 111c, 113c, 115c that do not allow the second slave set of security domains 111c, 113c, 115c, in particular the processor security domain 111c thereof, to use and/or access the sensor 119 and/or the actuator 121.

Exemplary use policies could, for instance, define how often, such as daily, once every week and the like, a respective slave set of security domains 111b,c, 113b,c, 115b,c can transmit data collected by the sensor 119 to a remote network entity, which kind of sensor data a respective slave set of security domains 111b,c, 113b,c, 115b,c is allowed to transmit to a remote network entity, whether the respective slave set of security domains 111b,c, 113b,c, 115b,c is allowed to change the configuration and/or the calibration of the sensor 119, whether the respective slave set of security domains 111b,c, 113b,c, 115b,c is allowed to trigger the actuator 121 and the like.

In an embodiment, the communication device 110 further comprises an electrical power storage, in particular a battery (not shown in figure 2), configured to supply electrical power and, thus, power the components of the communication device 110, wherein the respective use policy implemented in the respective slave set of security domains 111b,c, 113b,c, 115b,c defines for the respective slave set of security domains 111b,c, 113b,c, 115b,c an electrical power consumption limit. By way of example, in an embodiment a first use policy implemented by the master set of security domains 111a, 113a, 115a in the first slave set of security domains 111b, 113b, 115b can define for the first slave set of security domains 111b, 113b, 115b an exemplary electrical power consumption limit of 40% of the original maximum power of the electrical power storage, whereas a second use policy implemented by the master set of security domains 111a, 113a, 115a in the second slave set of security domains 111c, 113c, 115c can define for the second slave set of security domains 111c, 113c, 115c an exemplary electrical power consumption limit of 20% of the original maximum power of the electrical power storage.

In an embodiment, the respective use policy implemented in the respective slave set of security domains 111b,c, 113b,c, 115b,c defines that the respective slave set of security domains 111b,c, 113b,c, 115b,c is configured to receive from the network management entity 151b a new use policy and/or an updated policy for the respective slave set of security domains 111b,c, 113b,c, 115b,c. In other words, in an embodiment, the master set of security domains 111a, 113a, 115a is configured to share its local use policy enforcement function with the corresponding slave set of security domains 111b,c, 113b,c, 115b,c.

In an embodiment, the respective use policy implemented in the respective slave set of security domains 111b,c, 113b,c, 115b,c defines that the respective slave set of security domains 111b,c, 113b,c, 115b,c is accessible by a first remote network entity and a second remote network entity. In other words, in an embodiment the master set of security domains 111a, 113a, 115b is configured to implement a use policy in one or more of the respective slave set of security domains 111b,c, 113b,c, 115b,c that allows a shared usage of the respective slave set of security domains 111b,c, 113b,c, 115b,c.

As mentioned above and illustrated in figure 2, the processor 111 can be configured to implement a real-time execution environment 112 based on a real-time operating system. An application running in the real-time execution environment 112 can access security functions provided by the different sets of security domains, if the application has the corresponding use and/or access rights. In the embodiment shown in figure 2, the security system of the communication device 110a is configured to operate the respective processor security domains 111a-c of the three sets of security domains in parallel to the real-time execution environment 112.

The security system of the communication device 110 shown in figure 2 can be implemented in hardware and/or software. In an embodiment, the security system can be implemented using virtualization techniques. In an embodiment, the different RAM security domains 113a-c can be provided by different partitions of the RAM 113. In an embodiment, the data in the different RAM security domains 113a-c are accessible using "memory mapped I/O". As will be appreciated, the main purpose of the security system of the communication device 110a and its security domains is to isolate the processing of security critical tasks from standard processing in the real-time execution environment 112. This can be achieved by using a single processor-core having two execution modes, one secure mode and another mode for standard processes. In this case the RAM and registers assigned to the single core are duplicated and one set is assigned to the normal mode, i.e. the real-time execution environment 112, and the other set to the secure execution mode, i.e. the secure execution environment. According to another embodiment, the security system of the communication device 110a and its security domains can be implemented using a multi-processor-core architecture with at least one secure-core with an own RAM, which is dedicated to executing only security-critical processes.

In an embodiment, both the RAM 113 and the Flash memory 115 can comprise in addition to the respective RAM security domains 113a-c and the Flash memory security domains 115a-c a real-time RAM portion 114 and a real-time Flash memory portion 116, which can be accessed from the real-time execution environment 112 of the processor 111 and the respective processor security domains 111a-c of the three sets of security domains.

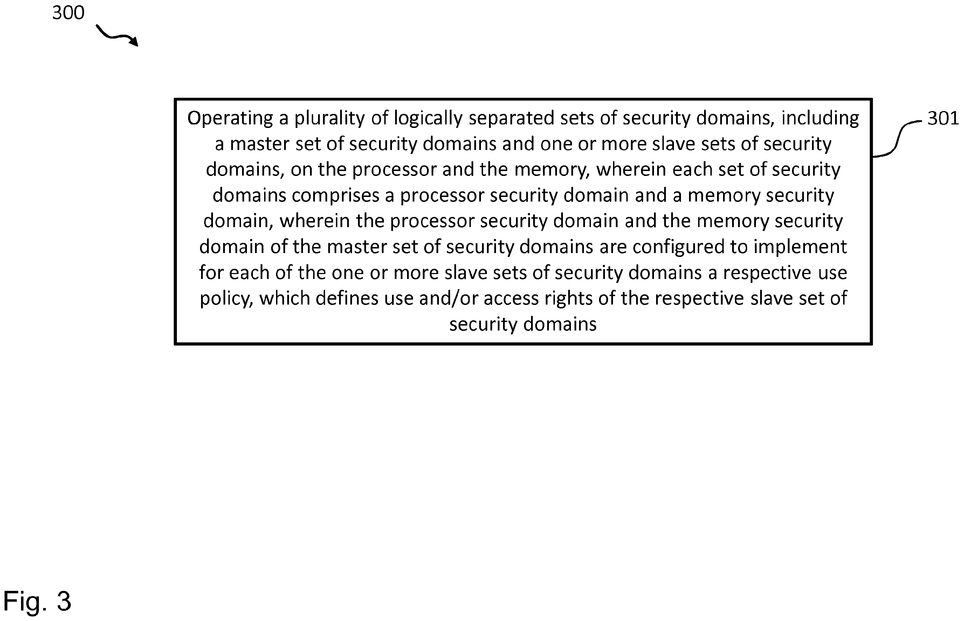

Figure 3 shows a diagram illustrating a corresponding method 300 of operating the communication device 110. The method 300 comprises the step 301 of operating the plurality of logically separated sets of security domains 111a-c, 113a-c, 115a-c, including the master set of security domains 111a, 113a, 115a and one or more slave sets of security domains 111b,c, 113b,c, 115b,c, on the processor 111 and the memory 113, 115, wherein each set of security domains comprises a processor security domain 111a-c and a memory security domain 113a-c, 115a-c, wherein the processor security domain 111a and the memory security domain 113a, 115a of the master set of security domains 111a, 113a, 115a are configured to implement for each of the one or more slave sets of security domains 111b,c, 113b,c, 115b,c a respective use policy, which defines use and/or access rights of the respective slave set of security domains 111b,c, 113b,c, 115b,c.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention, as defined by the appended claims.

## Claims

1. A communication device (110) for communicating data over a low power wide area, LPWA, communication network (100), wherein the communication device (110) comprises:
a processor (111) configured to process data;
a memory (113, 115) configured to store data;
a radio (117) configured to transmit and/or receive data over the LPWA communication network (100); and
a security system configured to operate a plurality of logically separated sets of security domains (111a-c, 113a-c, 115a-c), including a master set of security domains (111a, 113a, 115a) and one or more slave sets of security domains (111b,c, 113b,c, 115b,c), on the processor (111) and the memory (113, 115), wherein each set of security domains comprises a processor security domain (111a-c) and a memory security domain (113a-c, 115a-c), wherein the processor security domain (111a) and the memory security domain (113a, 115a) of the master set of security domains (111a, 113a, 115a) are configured to implement for each of the one or more slave sets of security domains (111b,c, 113b,c, 115b,c) a respective use policy, which defines use and/or access rights of the respective slave set of security domains (111b,c, 113b,c, 115b,c), **characterized in that**
the processor security domain (111a) and the memory security domain (113a, 115a) of the master set of security domains (111a, 113a, 115a) are configured to store the respective use policy in the respective memory domain (113b,c, 115b,c) of the one or more slave sets of security domains (111b,c, 113b,c, 115b,c), wherein the respective processor security domain (111b,c) of the one or more slave sets of security domains (111b,c, 113b,c, 115b,c) is configured to enforce the respective use policy stored in the respective memory domain (113b,c, 115b,c) of the one or more slave sets of security domains (111b,c, 113b,c, 115b,c), and wherein the master set of security domains (111a, 113a, 115a) is configured to access the radio (117) for receiving from a network management entity (151b) a new use policy and/or an updated use policy for one of the one or more slave sets of security domains (111b,c, 113b,c, 115b,c).

2. The communication device (110) of claim 1, wherein the master set of security domains (111a, 113a, 115a) is further configured to authenticate the communication device (110) within the LPWA communication network (100).

3. The communication device (110) of claim 1 or 2, wherein the processor security domain (111a) of the master set of security domains (111a, 113a, 115a) is further configured to verify a digital signature of a new use policy and/or an updated use policy for one of the one or more slave sets of security domains (111b,c, 113b,c, 115b,c).

4. The communication device (110) of any one of the preceding claims, wherein the respective use policy implemented in the respective slave set of security domains (111b,c, 113b,c, 115b,c) defines use and/or access rights of the respective slave set of security domains (111b,c, 113b,c, 115b,c) for using and/or accessing the radio (117) for transmitting and/or receiving data over the LPWA communication network (100).

5. The communication device (110) of any one of the preceding claims, wherein the communication device (110) further comprises a sensor (119) and wherein the respective use policy implemented in the respective slave set of security domains (111b,c, 113b,c, 115b,c) defines use and/or access rights of the respective slave set of security domains (111b,c, 113b,c, 115b,c) for using and/or accessing the sensor (119).

6. The communication device (110) of any one of the preceding claims, wherein the communication device (110) further comprises an actuator (121) and wherein the respective use policy implemented in the respective slave set of security domains (111b,c, 113b,c, 115b,c) defines the use and/or access rights of the respective slave set of security domains (111b,c, 113b,c, 115b,c) for using and/or accessing the actuator (121).

7. The communication device (110) of any one of the preceding claims, wherein the communication device (110) further comprises a power storage, in particular a battery, configured to supply electrical power and wherein the respective use policy implemented in the respective slave set of security domains (111b,c, 113b,c, 115b,c) defines for the respective slave set of security domains (111b,c, 113b,c, 115b,c) an electrical power consumption limit.

8. The communication device (110) of any one of the preceding claims, wherein the respective use policy implemented in the respective slave set of security domains (111b,c, 113b,c, 115b,c) defines that the respective slave set of security domains (111b,c, 113b,c, 115b,c) is configured to receive from a network management entity (151b) a new use policy and/or an updated policy for the respective slave set of security domains (111b,c, 113b,c, 115b,c).

9. The communication device (110) of any one of the preceding claims, wherein the respective use policy implemented in the respective slave set of security domains (111b,c, 113b,c, 115b,c) defines that the respective slave set of security domains (111b,c, 113b,c, 115b,c) is accessible by a first network entity and a second network entity.

10. The communication device (110) of any one of the preceding claims, wherein the processor (111) is configured to implement a real-time execution environment (112) based on a real-time operating system and wherein the security system is configured to operate the respective processor security domains (111a-c) of the plurality of sets of security domains (111a-c, 113a-c, 115a-c) in parallel to the real-time execution environment (112).

11. The communication device (110) of claim 10, wherein the memory (113, 115) comprises in addition to the respective memory security domains (113a-c, 115a-c) of the plurality of sets of security domains (111a-c, 113a-c, 115a-c) a real-time memory portion (114, 116) that is configured to be accessible from the real-time execution environment (112) and the respective processor security domains (111a-c) of the plurality of sets of security domains (111a-c, 113a-c, 115a-c).

12. A method (300) of operating a communication device (110) for communicating data over a low power wide area, LPWA, communication network (100), the communication device (110) comprising a processor (111) configured to process data, a memory (113, 115) configured to store data and a radio (117) configured to transmit and/or receive data over the LPWA communication network (100), wherein the method (300) comprises:
operating (301) a plurality of logically separated sets of security domains (111a-c, 113a-c, 115a-c), including a master set of security domains (111a, 113a, 115a) and one or more slave sets of security domains (111b,c, 113b,c, 115b,c), on the processor (111) and the memory (113, 115), wherein each set of security domains comprises a processor security domain (111a-c) and a memory security domain (113a-c, 115a-c), wherein the processor security domain (111a) and the memory security domain (113a, 115a) of the master set of security domains (111a, 113a, 115a)implement for each of the one or more slave sets of security domains (111b,c, 113b,c, 115b,c) a respective use policy, which defines use and/or access rights of the respective slave set of security domains (111b,c, 113b,c, 115b,c),
**characterized in that**
the processor security domain (111a) and the memory security domain (113a, 115a) of the master set of security domains (111a, 113a, 115a) store the respective use policy in the respective memory domain (113b,c, 115b,c) of the one or more slave sets of security domains (111b,c, 113b,c, 115b,c),
wherein the respective processor security domain (111b,c) of the one or more slave sets of security domains (111b,c, 113b,c, 115b,c) enforces the respective use policy stored in the respective memory domain (113b,c, 115b,c) of the one or more slave sets of security domains (111b,c, 113b,c, 115b,c), and
wherein the master set of security domains (111a, 113a, 115a) accesses the radio (117) for receiving from a network management entity (151b) a new use policy and/or an updated use policy for one of the one or more slave sets of security domains (111b,c, 113b,c, 115b,c).

13. A computer program product comprising program code for performing the method (300) of claim 12, when executed on a computer or a processor.

## Patentansprüche

1. Kommunikationsvorrichtung (110) zum Kommunizieren von Daten über ein energiesparendes Weitbereichs-, LPWA, Kommunikationsnetzwerk (100), wobei die Kommunikationsvorrichtung (110) umfasst:
einen Prozessor (111), der konfiguriert ist, Daten zu verarbeiten;
einen Speicher (113, 115), der konfiguriert ist, Daten zu speichern;
ein Funkgerät (117), das konfiguriert ist, Daten über das LPWA-Kommunikationsnetzwerk (100) zu senden und/oder zu empfangen; und
ein Sicherheitssystem, das konfiguriert ist, mehrere logisch getrennte Sätze von Sicherheitsdomänen (111a-c, 113a-c, 115a-c), einschließlich eines Master-Satzes von Sicherheitsdomänen (111a, 113a, 115a) und eines oder mehrerer Slave-Sätze von Sicherheitsdomänen (111b,c, 113b,c, 115b,c), auf dem Prozessor (111) und dem Speicher (113, 115) zu betreiben, wobei jeder Satz von Sicherheitsdomänen eine Prozessorsicherheitsdomäne (111a-c) und eine Speichersicherheitsdomäne (113a-c, 115a-c) umfasst, wobei die Prozessorsicherheitsdomäne (111a) und die Speichersicherheitsdomäne (113a, 115a) des Master-Satzes von Sicherheitsdomänen (111a, 113a, 115a) konfiguriert sind, für jeden der einen oder mehreren Slave-Sätze von Sicherheitsdomänen (111b,c, 113b,c, 115b,c) eine jeweilige Nutzungsrichtlinie zu implementieren, die Nutzungs- und/oder Zugriffsrechte des jeweiligen Slave-Satzes von Sicherheitsdomänen (111b,c, 113b,c, 115b,c) definiert,
**dadurch gekennzeichnet, dass**
die Prozessorsicherheitsdomäne (111a) und die Speichersicherheitsdomäne (113a, 115a) des Master-Satzes von Sicherheitsdomänen (111a, 113a, 115a) konfiguriert sind, die jeweilige Nutzungsrichtlinie in der jeweiligen Speicherdomäne (113b,c, 115b,c) der einen oder mehrere Slave-Sätze von Sicherheitsdomänen (111b,c, 113b,c, 115b,c) zu speichern, wobei die jeweilige Prozessorsicherheitsdomäne (111b,c) des einen oder der mehreren Slave-Sätze von Sicherheitsdomänen (111b,c, 113b,c, 115b,c) konfiguriert ist, die in der jeweiligen Speicherdomäne (113b,c, 115b,c) des einen oder der mehreren Slave-Sätze von Sicherheitsdomänen (111b,c, 113b,c, 115b,c) gespeicherte jeweilige Nutzungsrichtlinie durchzusetzen, und wobei der Master-Satz von Sicherheitsdomänen (111a, 113a, 115a) konfiguriert ist, auf das Funkgerät (117) zuzugreifen zum Empfangen, von einer Netzwerkverwaltungsentität (151b), einer neuen Nutzungsrichtlinie und/oder aktualisierten Nutzungsrichtlinie für einen der einen oder mehreren Slave-Sätze von Sicherheitsdomänen (111b,c, 113b,c, 115b, c).

2. Kommunikationsvorrichtung (110) nach Anspruch 1, wobei der Master-Satz von Sicherheitsdomänen (111a, 113a, 115a) ferner konfiguriert ist, die Kommunikationsvorrichtung (110) innerhalb des LPWA-Kommunikationsnetzwerks (100) zu authentifizieren.

3. Kommunikationsvorrichtung (110) nach Anspruch 1 oder 2, wobei die Prozessorsicherheitsdomäne (111a) des Master-Satzes von Sicherheitsdomänen (111a, 113a, 115a) ferner konfiguriert ist, eine digitale Signatur einer neuen Nutzungsrichtlinie und/oder einer aktualisierten Nutzungsrichtlinie für einen der einen oder mehreren Slave-Sätze von Sicherheitsdomänen (111b,c, 113b,c, 115b,c) zu verifizieren.

4. Kommunikationsvorrichtung (110) nach einem der vorhergehenden Ansprüche, wobei die jeweilige Nutzungsrichtlinie, die in dem jeweiligen Slave-Satz von Sicherheitsdomänen (111b,c, 113b,c, 115b,c) implementiert ist, Nutzungs- und/oder Zugriffsrechte des jeweiligen Slave-Satzes von Sicherheitsdomänen (111b,c, 113b,c, 115b,c) definiert zur Nutzung und/oder zum Zugriff auf das Funkgerät (117) zum Senden und/oder Empfangen von Daten über das LPWA-Kommunikationsnetzwerk (100) .

5. Kommunikationsvorrichtung (110) nach einem der vorhergehenden Ansprüche, wobei die Kommunikationsvorrichtung (110) ferner einen Sensor (119) umfasst, und wobei die jeweilige Nutzungsrichtlinie, die in dem jeweiligen Slave-Satz von Sicherheitsdomänen (111b,c, 113b,c, 115b,c) implementiert ist, Nutzungs- und/oder Zugriffsrechte des jeweiligen Slave-Satzes von Sicherheitsdomänen (111b,c, 113b,c, 115b,c) zur Nutzung und/oder zum Zugriff auf den Sensor (119) definiert.

6. Kommunikationsvorrichtung (110) nach einem der vorhergehenden Ansprüche, wobei die Kommunikationsvorrichtung (110) ferner einen Aktuator (121) umfasst, und wobei die jeweilige Nutzungsrichtlinie, die in dem jeweiligen Slave-Satz von Sicherheitsdomänen (111b,c, 113b,c, 115b,c) implementiert ist, Nutzungs- und/oder Zugriffsrechte des jeweiligen Slave-Satzes von Sicherheitsdomänen (111b,c, 113b,c, 115b,c) zur Nutzung und/oder zum Zugriff auf den Aktuator (121) definiert.

7. Kommunikationsvorrichtung (110) nach einem der vorhergehenden Ansprüche, wobei die Kommunikationsvorrichtung (110) ferner einen Energiespeicher, insbesondere eine Batterie, umfasst, der konfiguriert ist, elektrische Energie bereitzustellen, und wobei die jeweilige Nutzungsrichtlinie, die in dem jeweiligen Slave-Satz von Sicherheitsdomänen (111b,c, 113b,c, 115b,c) implementiert ist, für den jeweiligen Slave-Satz von Sicherheitsdomänen (111b,c, 113b,c, 115b,c) eine elektrische Energieverbrauchsgrenze definiert.

8. Kommunikationsvorrichtung (110) nach einem der vorhergehenden Ansprüche, wobei die jeweilige Nutzungsrichtlinie, die in dem jeweiligen Slave-Satz von Sicherheitsdomänen (111b,c, 113b,c, 115b,c) implementiert ist, definiert, dass der jeweilige Slave-Satz von Sicherheitsdomänen (111b,c, 113b,c, 115b,c) konfiguriert ist, von einer Netzwerkverwaltungsentität (151b) eine neue Nutzungsrichtlinie und/oder eine aktualisierte Richtlinie für den jeweiligen Slave-Satz von Sicherheitsdomänen (111b,c, 113b,c, 115b,c) zu empfangen.

9. Kommunikationsvorrichtung (110) nach einem der vorhergehenden Ansprüche, wobei die jeweilige Nutzungsrichtlinie, die in dem jeweiligen Slave-Satz von Sicherheitsdomänen (111b,c, 113b,c, 115b,c) implementiert ist, definiert, dass der jeweilige Slave-Satz von Sicherheitsdomänen (111b,c, 113b,c, 115b,c) von einer ersten Netzwerkentität und einer zweiten Netzwerkentität zugreifbar ist.

10. Kommunikationsvorrichtung (110) nach einem der vorhergehenden Ansprüche, wobei der Prozessor (111) konfiguriert ist, eine Echtzeit-Ausführungsumgebung (112) basierend auf einem Echtzeit-Betriebssystem zu implementieren, und wobei das Sicherheitssystem konfiguriert ist, die jeweiligen Prozessorsicherheitsdomänen (111a-c) der mehreren Sätze von Sicherheitsdomänen (111a-c, 113a-c, 115a-c) parallel zu der Echtzeit-Ausführungsumgebung (112) zu betreiben.

11. Kommunikationsvorrichtung (110) nach Anspruch 10, wobei der Speicher (113, 115) zusätzlich zu den jeweiligen Speichersicherheitsdomänen (113a-c, 115a-c) der mehreren Sätze von Sicherheitsdomänen (111a-c, 113a-c, 115a-c) einen Echtzeit-Speicherabschnitt (114, 116) umfasst, der konfiguriert ist, von der Echtzeit-Ausführungsumgebung (112) und den jeweiligen Prozessorsicherheitsdomänen (111a-c) der mehreren Sätze von Sicherheitsdomänen (111a-c, 113a-c, 115a-c) zugreifbar zu sein.

12. Verfahren (300) zum Betreiben einer Kommunikationsvorrichtung (110) zum Kommunizieren von Daten über ein stromsparendes Weitbereichs-, LPWA, Kommunikationsnetzwerk (100), wobei die Kommunikationsvorrichtung (110) einen Prozessor (111) umfasst, der konfiguriert ist, Daten zu verarbeiten, einen Speicher (113, 115), der konfiguriert ist, Daten zu speichern, und ein Funkgerät (117), das konfiguriert ist, Daten über das LPWA-Kommunikationsnetzwerk (100) zu senden und/oder zu empfangen, wobei das Verfahren (300) umfasst:
Betreiben (301) mehrerer logisch getrennter Sätze von Sicherheitsdomänen (111a-c, 113a-c, 115a-c), einschließlich eines Master-Satzes von Sicherheitsdomänen (111a, 113a, 115a) und eines oder mehrerer Slave-Sätze von Sicherheitsdomänen (111b,c, 113b,c, 115b,c), auf dem Prozessor (111) und dem Speicher (113, 115), wobei jeder Satz von Sicherheitsdomänen eine Prozessorsicherheitsdomäne (111a-c) und eine Speichersicherheitsdomäne umfasst (113a-c, 115a-c), wobei die Prozessorsicherheitsdomäne (111a) und die Speichersicherheitsdomäne (113a, 115a) des Master-Satzes von Sicherheitsdomänen (111a, 113a, 115a) für jede der einen oder mehreren Slave-Sätze von Sicherheitsdomänen (111b,c, 113b,c, 115b,c) eine jeweilige Nutzungsrichtlinie implementiert, die Nutzungs- und/oder Zugriffsrechte des jeweiligen Slave-Satzes von Sicherheitsdomänen (111b,c, 113b,c, 115b,c) definiert,
**dadurch gekennzeichnet, dass**
die Prozessorsicherheitsdomäne (111a) und die Speichersicherheitsdomäne (113a, 115a) des Master-Satzes von Sicherheitsdomänen (111a, 113a, 115a) die jeweilige Nutzungsrichtlinie in der jeweiligen Speicherdomäne (113b,c, 115b,c) der einen oder der mehreren Slave-Sätze von Sicherheitsdomänen (111b,c, 113b,c, 115b,c) speichert,
wobei die jeweilige Prozessorsicherheitsdomäne (111b,c) des einen oder der mehreren Slave-Sätze von Sicherheitsdomänen (111b,c, 113b,c, 115b,c) die in der jeweiligen Speicherdomäne (113b,c, 115b,c) des einen oder der mehreren Slave-Sätze von Sicherheitsdomänen (111b,c, 113b,c, 115b,c) gespeicherte jeweilige Nutzungsrichtlinie durchsetzt, und
wobei der Master-Satz von Sicherheitsdomänen (111a, 113a, 115a) auf das Funkgerät (117) zugreift zum Empfangen, von einer Netzwerkverwaltungsentität (151b), einer neuen Nutzungsrichtlinie und/oder einer aktualisierten Nutzungsrichtlinie für einen der einen oder mehreren Slave-Sätze von Sicherheitsdomänen (111b,c, 113b,c, 115b,c).

13. Computerprogrammprodukt, umfassend Programmcode zum Durchführen des Verfahrens (300) nach Anspruch 12, wenn es auf einem Computer oder einem Prozessor ausgeführt wird.

## Revendications

1. Dispositif de communication (110) pour communiquer des données via un réseau de communication étendu à faible puissance LPWA (100), dans lequel le dispositif de communication (110) comprend :
un processeur (111) configuré pour traiter des données ;
une mémoire (113, 115) configurée pour mémoriser des données ;
une radio (117) configurée pour transmettre et/ou recevoir des données via le réseau de communication LPWA (100) ; et
un système de sécurité configuré pour faire fonctionner un ou plusieurs ensemble de domaines de sécurité séparés logiquement (111a-c, 113a-c, 115a-c), incluant un premier ensemble de domaines de sécurité maitres (111a, 113a, 115a), sur le processeur (111) et la mémoire (113, 115), dans lequel chaque ensemble de domaines de sécurité comprend un domaine de sécurité de processeur (111a-c) et un domaine de sécurité de mémoire (113a-c, 115a-c), dans lequel le domaine de sécurité de processeur (111a) et le domaine de sécurité de mémoire (113a-115a) de l'ensemble maître de domaines de sécurité (111a, 113a, 115a) sont configurés pour implémenter pour chacun des ensembles esclaves de domaines de sécurité (111b,c, 113b,c, 115b,c) une politique d'utilisation respective, qui définit des droits d'utilisation et/ou d'accès de l'ensemble esclave respectif de domaine de sécurité (111b,c, 113b,c, 115b,c)
**caractérisé en ce que**
le domaine de sécurité de processeur (111a) et le domaine de sécurité de mémoire (113a, 115a) de l'ensemble maître de domaines de sécurité (111a, 113a, 115a) sont configurées pour mémoriser la politique d'utilisation respective dans le domaine de mémoire respectif (113b,c, 115b,c) du ou des ensembles esclaves de domaines de sécurité (111b,c, 113b,c, 115b,c), dans lequel le domaine de sécurité de processeur respectif (111b,c) du ou des ensembles esclaves de domaine de sécurité (111b,c, 113b,c, 115b,c) est configuré pour mettre en oeuvre la politique d'utilisation respective mémorisée dans le domaine de mémoires respectif (113b,c, 115b,c) du ou des ensembles esclaves de domaines de sécurité (111b,c, 113b,c, 115b,c) et dans lequel l'ensemble maître de domaines de sécurité (111a, 113a, 115a) est configuré pour accéder à la radio (117) pour recevoir depuis une entité de gestion de réseau (151b) une nouvelle politique d'utilisation et/ou une politique d'utilisation mise à jour pour un du ou des ensembles esclaves de domaines de sécurité (111b,c, 113b,c, 115b,c).

2. Dispositif de communication (110) selon la revendication 1, dans lequel l'ensemble maître de domaines de sécurité (111a, 113a, 115a) est en outre configuré pour authentifier le dispositif de communication (110) à l'intérieur du réseau de communication LPWA (100).

3. Dispositif de communication (110) selon une quelconque des revendications précédentes, dans lequel le domaine de sécurité de processeur (111a) de l'ensemble maître de domaines de sécurité (111a, 113a, 115a) est en outre configuré pour vérifier une signature numérique d'une nouvelle politique utilisation et/ou d'une politique utilisation mise à jour pour un du ou des ensembles esclaves de domaines de sécurité (111b,c, 113b,c, 115b,c).

4. Dispositif de communication (110) selon une quelconque des revendications précédentes, dans lequel la politique d'utilisation respective implémentée dans l'ensemble esclave respectif de domaines de sécurité (111b,c, 113b,c, 115b,c) définit des droits d'utilisation et/ou d'accès de l'ensemble esclave respectif de domaine de sécurité (111b,c, 113b,c, 115b,c) pour utiliser et/ou accéder à la radio (117) pour transmettre et/ou recevoir des données via le réseau de communication LPWA (100).

5. Dispositif de communication (110) selon une quelconque des revendications précédentes, dans lequel le dispositif de communication (110) comprend en outre un capteur (119) et dans lequel la politique d'utilisation respective implémentée dans l'ensemble esclave respectif de domaines de sécurité (111b,c, 113b,c, 115b,c) définit des droits d'utilisation et/ou d'accès de l'ensemble esclave respectif de domaine de sécurité (111b,c, 113b,c, 115b,c) pour utiliser et/ou accéder au capteur (119).

6. Dispositif de communication (110) selon une quelconque des revendications précédentes, dans lequel le dispositif de communication (110) comprend en outre un actionneur (121) et dans lequel la politique d'utilisation respective implémentée dans l'ensemble esclave respectif de domaines de sécurité (111b,c, 113b,c, 115b,c) définit les droits d'utilisation et/ou d'accès de l'ensemble esclave respectif de domaines de sécurité (111b,c, 113b,c, 115b,c) utilisant et/ou accédant à l'actionneur (121).

7. Dispositif de communication (110) selon une quelconque des revendications précédentes, dans lequel le dispositif de communication (110) comprend en outre un stockage d'énergie électrique, en particulier une batterie, configuré pour alimenter une puissance électrique et dans lequel la politique d'utilisation respective implémentée dans l'ensemble esclave respectif de domaines de sécurité (111b,c, 113b,c, 115b,c) définit pour l'ensemble esclave respectif de domaines de sécurité (111b,c, 113b,c, 115b,c) une limite de consommation de puissance électrique.

8. Dispositif de communication (110) selon une quelconque des revendications précédentes, dans lequel la politique d'utilisation respective implémentée dans l'ensemble esclave respectif de domaines de sécurité (111b,c, 113b,c, 115b,c) définit que l'ensemble esclave respectif de domaines de sécurité (111b,c, 113b,c, 115b,c) est configuré pour recevoir depuis une entité de gestion de réseau (151b) une nouvelle politique d'utilisation et/ou une politique mise à jour pour l'ensemble esclave respectif de domaines de sécurité (111b,c, 113b,c, 115b, c).

9. Dispositif de communication (110) selon une quelconque des revendications précédentes, dans lequel la politique d'utilisation respective implémentée dans l'ensemble esclave respectif de domaines de sécurité (111b,c, 113b,c, 115b,c) définit que l'ensemble esclave respectif de domaines de sécurité (111b,c, 113b,c, 115b,c) est accessible par une première entité de réseau et une seconde entité de réseau.

10. Dispositif de communication (110) selon une quelconque des revendications précédentes, dans lequel le processeur (111) est configuré pour implémenter un environnement d'exécution en temps réel (112) sur la base d'un système d'exploitation en temps réel et dans lequel le système de sécurité est configuré pour faire fonctionner les domaines de sécurité de processeurs respectifs (111a-c) de la pluralité d'ensemble de domaines de sécurité (111a-c, 113a-c, 115a-c) en parallèle à l'environnement d'exécution en temps réel (112) .

11. Dispositif de communication (110) sur la revendication 10, dans lequel la mémoire (113, 115) comprend en plus des domaines de sécurité de mémoire respectifs (113a-c, 115a-c) de la pluralité d'ensemble de domaines de sécurité (111a-c, 113a-c, 115a-c) une portion de mémoire en temps réel (114, 116) qui est configurée afin d'être accessible à partir de l'environnement d'exécution en temps réel (112) et les domaines de sécurité de processeur respectifs (111a-c) de la pluralité d'ensemble de domaines de sécurité (111a-c, 113a-c, 115a-c).

12. Procédé (300) de fonctionnement d'un dispositif de communication (110) pour communiquer des données via un réseau de communication étendu à faible puissance LPWA (100), le dispositif de communication (110) comprenant un processeur (111) configuré pour traiter des données, une mémoire (113, 115) configurée pour mémoriser des données et une radio (117) configurée pour transmettre et/ou recevoir des données via le réseau de communication LPWA (100), dans lequel le procédé (300) comprend de :
faire fonctionner (301) une pluralité d'ensembles séparés logiquement de domaines de sécurité (111a-c, 113a-c, 115a-c) incluant un ensemble maître de domaines de sécurité (111a, 113a, 115a) et un ou plusieurs ensembles esclaves de domaines de sécurité (111b,c, 113b,c , 115b,c) du processeur (111) et de la mémoire (113, 115), dans lequel chaque ensemble de domaines de sécurité comprend un domaine de sécurité de processeur (111a-c) et un domaine de sécurité de mémoire (113a-c, 115a-c), dans lequel le domaine de sécurité de processeur (111a) et le domaine de sécurité de mémoire (113a, 115a) de l'ensemble maître de domaines de sécurité (111a, 113a, 115a) implémente pour chacun du ou des ensembles esclaves de domaines de sécurité (111b,c, 113b,c, 115b,c) une politique utilisation respective, qui définit des droits d'utilisation et/ou d'accès de l'ensemble esclave respectif de domaine de sécurité (111b,c, 113b,c, 115b,c),
**caractérisé en ce que**
le domaine de sécurité de processeur (111a) et le domaine de sécurité de mémoire (113a, 115a) de l'ensemble maître de domaines de sécurité (111a, 113a, 115a) mémorisent la politique d'utilisation respective dans le domaine de mémoire respectif (113b,c, 115b,c) du ou des ensembles esclaves de domaines de sécurité (111b,c, 113b,c, 115b,c),
dans lequel le domaine de sécurité de processeur respectif (111b,c) du ou des ensembles esclaves de domaines de sécurité (111b,c, 113b,c, 115b,c) met en oeuvre la politique d'utilisation respective mémorisée dans le domaine de mémoire respectif (113b,c, 115b,c) du ou des ensembles esclaves de domaines de sécurité (111b,c, 113b,c, 115b,c) et
dans lequel l'ensemble maître de domaines de sécurité (111a, 113a, 115a) accède à la radio (117) pour recevoir depuis une entité de gestion de réseau (151b) une nouvelle politique d'utilisation et/ou une politique d'utilisation mise à jour pour un du ou des ensembles esclaves de domaines de sécurité (111b,c, 113b,c, 115b,c).

13. Produit de programme informatique comprenant du code de programme pour apprendre pour mettre en oeuvre le procédé (300) selon la revendication 12, lorsqu'il est exécuté sur un ordinateur ou un processeur.
